# EUROPÄISCHE PATENTANMELDUNG

(11) **EP 1 024 572 A2**
(43) Veröffentlichungstag der Anmeldung: **02.08.2000**
(21) Anmeldenummer: 99121632.6
(22) Anmeldetag: 30.10.1999
(51) Int. Cl.: H02G 15/00

(54) **Elektromagnetische Abschirmung für ein Starkstromkabel**

(30) Priorität: 06.11.1998 DE 19851189
(71) Anmelder: NKT Cables GmbH, 51063 Köln (DE)
(72) Erfinder: Brakelmann, Heinrich, Prof. Dr.-Ing., 47495 Rheinberg (DE)

(57) **Zusammenfassung**

Die Erfindung betrifft eine Anordnung zur elektromagnetischen Abschirmung mindestens eines Starkstromkabels (10) im Erdreich (12) auf mindestens einem Teil seiner Länge, wobei das Starkstromkabel auf mindestens einem Teil seines Umfangs von einer Hülle (20) aus leitfähigem Material oder aus Ferromagnetikum umgeben ist. Es wird vorgeschlagen, daß mit der Hülle auf eine bestimmte Länge ein wärmeleitfähiges Blech - beispielsweise eine Metallplatte - verbunden ist, das sich seitlich ins umgebende Erdreich (12) erstreckt und zur Wärmeableitung beiträgt.

## Beschreibung

Die Erfindung betrifft eine elektromagnetischen Abschirmung für mindestens ein Starkstromkabel oder Kabelsystem nach dem Oberbegriff des 1. Anspruchs.

Die stromführenden Leiter von Energiekabeln erzeugen magnetische Felder, die oberhalb der Kabeltrasse durchaus die inzwischen durch den Gesetzgeber vorgeschriebene Grenze von 100 mT überschreiten können. Es fehlt nicht an Vorschlägen zur Abschirmung solcher Kabel, so z.B. durch teilweise Rückleitung des Leiterstroms durch den Kabelmantel oder Schirm, oder auch durch Umhüllung der Kabel mit einer ferromagnetischen Kapselung.

Eine solche magnetische Schirmung erzeugt jedoch - wenn sie denn wirksam sein soll - spürbare Verlustleistungen und damit auch Verlustwärme im Kabelgraben. Während erstere Geld kosten und ökologisch unerwünscht sind, schränken letztere die Kabelbelastbarkeit ein.

Beispielsweise ist ein Vorschlag für eine Kabelabschirmung dargestellt in dem CIGRE-Bericht 21-201 (1998) 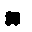 Shielding Techniques to reduce magnetic felds associated with underground power cables" von G. Bucea und H. Kent. Ferromagnetische oder hochleitfähige Platten (z.B. Cu, Al) werden in U-Form gebogen und als nach unten offenes 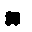 U" über die Kabel gelegt Die Schirmwirkung kann noch verbessert werden, wenn unterhalb der Kabel, also auf die Kabelgrabensohle, eine zusätzliche Platte des gleichen Materials gelegt wird, so daß ein geschlossener Abschirmkäfig entsteht.

In dem CIGRE-Bericht wird vorgeschlagen, den entstehenden Hohlraum zwischen Kabel und U-Profil mit Rückfüllmaterial zu verfüllen, um nicht einen zu hohen Wärmewiderstand des Luftpolsters in Kauf nehmen zu müssen. Die im Schirmungsmaterial entstehenden Verluste müssen über das Erdreich abgeführt werden, was zu zusätzlichen Erwärmungen der Kabel und damit zu erheblichen Belastbarkeitsminderungen führt.

Es ist Aufgabe der Erfindung eine Anordnung für die elektromagnetische Abschirmung von Kabelsystemen anzugeben, bei denen Belastbarkeitsminderungen vermieden werden.

Erfindungsgemäß wird im wesentlichen vorgeschlagen, daß mindestens ein Marerialstreifen aus wärmeleitfähigem Material mit der Hülle auf mindestens einem Teil ihrer Länge verbunden ist, und sich ins umgebende Erdreich erstreckt. Vorzugsweise kann sich ein Wärmeleitstreifen - beispielsweise als Metallplatte - einseitig oder beiderseits des Kabels in die Tiefe des Erdreichs erstrecken, die etwa der Breite des Kabelgrabens entspricht. Mehrere sich seitlich erstreckende Wärmeleitstreifen können in einer Ebene (etwa waagerecht) liegen. Die Form der Abschirmhülle ist nicht entscheidend, sie kann entweder zylindrisch oder vieleckig (auch quadratisch) ausgeführt sein. Sie kann gitterartig ausgebildet oder aus flächigen Elementen gebildet sein. Das Material des Wärmeleitstreifens kann Aluminium oder Kupfer oder ferromagnetisch sein.

Der Einsatz eines - auch als Wärmeleitblech bezeichneten - Wärmeleitstreifens sorgt für eine wesentlich verbesserte Wärmeabfuhr der Verluste im Schirmungsmaterial wie auch der Kabelverluste.

Als weiterer Vorschlag kann vorgesehen sein, daß der Hohlraum zwischen Kabel und Abschirmhülle (beispielsweise als U-Profil) nicht mit Erdreich oder sonstigem Füllmaterial verfüllt wird, sondern als Luftkanal genutzt wird. Der Luftkanal könnte dann zusätzlich in erforderlichen Abständen mit Hilfe vertikaler Rohre oder Schächte zur Erdoberfläche geführt werden und somit im Austausch mit der Umgebungsluft stehen.

Durch die tiefe Erstreckung der Abschirmhülle in das Erdreich in Form eines breiten Wärmeleitblechs wird die Wärmeabfuhr stark verbessert. Es läßt sich nachweisen, daß in einer solchen Anordnung durch auftretende Temperaturgradienten längs des Kabelgrabens eine selbsttätige Luftumwälzung und damit ein spürbarer Kühleffekt sowie ein guter Wärmeübergang zwischen Kabeloberfläche und Schirmung erreicht wird. Je nach Auslegung der Anlage kann auf diese Weise statt einer Minderung der Kabelbelastbarkeit sogar noch eine Steigerung erzielt werden.

In Erweiterung dieses Systems kann auf den Vorschlag einer Induktionsleiterschleife gemäß der DE 19723879.3 C1 zurückgegriffen werden, die dem Kabelsystem Energie entzieht mit deren Hilfe ein Ventilator zur Zwangsumwälzung der Kühlluft angetrieben werden kann. Eine solche Kühlung würde autark, d.h. ohne äußere Energieversorgung, und von ihrer Intensität her abhängig von der Stärke des Laststromes funktionieren.

Das beschriebene System hat zudem den Vorteil, daß die im Kabelgraben entstehenden, normalerweise nicht zugänglichen Verlustleistungen der Kabel und der Abschirmung zur Erdoberfläche geführt und damit genutzt werden können, beispielsweise zur Gebäudeheizung.

Mit einem Kabelsystem mit Luftkühlung kann daher den beiden ökologischen Forderungen der Vermeidung starker elektromagnetischer Felder sowie einer verlustarmen Energieübertragung mit geringem Aufwand begegnet werden.

Die Erfindung wird in den Figuren näher dargestellt Sie zeigen im Einzelnen:
Fig. 1 ein Kabelsystem mit Metallplatte im Abschirmbereich und
Fig. 2 und Fig. 3 eine Anordnung eines Kabelsystems mit Luftkühlung.

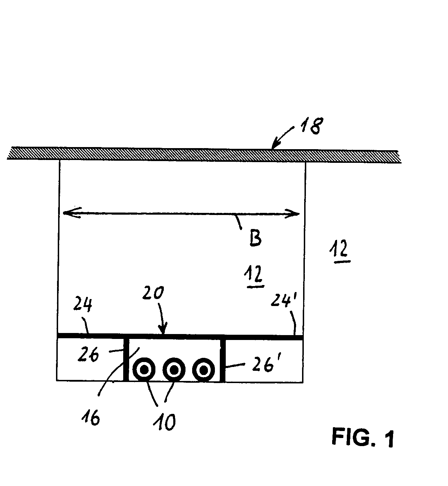

In Fig. 1 ist eine Anordnung zur magnetischen Abschirmung eines Kabelsystems 10 gezeigt, wobei eine breite Metallplatte 24,24' oberhalb des Kabelsystems in den Kabelgraben der Breite B eingebracht ist Durch die Metallplatte verbessert sich die Wärmeabfuhr. Die Abschirmhülle 20 wird seitlich durch senkrecht stehende Metallplatten 26 begrenzt. Auf der Sohle des Kabelgrabens liegt kein abschirmendes Material. Der Hohlraum 16 zwischen Kabel 10 und Abschirmhülle kann mit Erdreich, mit sonstigem Füllmaterial verfüllt sein, oder als Luftkanal genutzt werden.

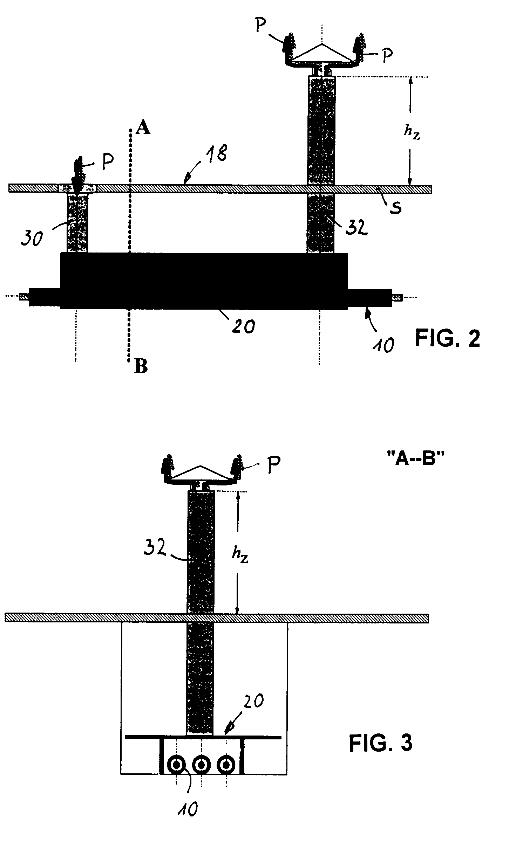

In Fig. 2 ist die Kabelkühlung mit Luftumwälzung in der Abschirmhülle 20 dargestellt Es ist bei einer Straßenunterquerung ein Kabelsystem 10 mit einer Abschirmhülle 20 als Luftkanal in einer bestimmten Legetiefe dargestellt Von der Abschirmhülle 20 ausgehend sind an zwei Stellen ein oder mehrere Rohre 30,32 hoch zur Erdoberfläche geführt. Der linke vertikale Rohrabschnitt 30 mit kleinemRohrquerschnitt endet an der Erdoberfläche und der rechte vertikale Rohrabschnitt 32 mit größerem Rohrquerschnitt endet in einer Aus-laßhöhe *h*_{*z*} über der Erdoberfläche 18. Der Straßenaufbau hat eine bestimmte Schichtdicke s, die die natürliche Wärmeableitung begrenzt.

Die Kühlrohre werden bei wechselnder Außenlufttemperatur immer dann Luft ansaugen und umwälzen, solange die Außenluft kühler ist als die Umgebung der Kühlrohre im Kabelgraben, d.h. selbst wenn das Kabelsystem keine Verluste abgibt, sorgt die Außenluft für eine Kühlung der Trasse, solange ihre Temperatur niedrig genug bleibt bzw. der Boden hinreichend vorgewärmt ist Die Pfeile P geben die Strömungsrichtung der Luft an.

In Fig. 3 findet sich die Schnittdarstellung AB zu Fig. 2.

## Patentansprüche

1. Anordnung zur elektromagnetischen Abschirmung mindestens eines Starkstromkabels (**10**) oder Kabelsystems im Erdreich (**12**) auf mindestens einem Teil seiner Länge, wobei das Starkstromkabel oder Kabelsystem in mindestens einem Winkelbereich seines Umfangs von einer Hülle (**20**) aus leitfähigem Material oder aus einem Ferromagnetikum umgeben ist, **dadurch gekennzeichnet**, daß mindestens ein flächig ausgebildetes wärmeleitfähiges Material (**24**) - im folgenden 'Wärmeleitstreifen' - mit der Hülle (**20**) auf mindestens einem Teil ihrer Länge verbunden ist und sich das Flachmaterial ins umgebende Erdreich (**12**) erstreckt.

2. Abschirmanordnung nach Anspruch 1, **dadurch gekennzeichnet**, daß mehrere vorhandene Wärmeleitstreifen (**24,24'**) in einer Ebene liegen.

3. Abschirmanordnung nach Anspruch 1 oder 2, **dadurch gekennzeichnet**, daß die Ausdehnung quer zur Kabelachse mindestens eines Wärmeleitstreifens (**24,24'**) der Trassenbreite (B) entspricht.

4. Abschirmanordnung nach einem der vorhergehenden Ansprüche, **dadurch gekennzeichnet**, daß der Raum (**16**) zwischen dem Starkstromkabel (**10**) oder Kabelsystem und der Hülle (**20**) mit Luft ausgefüllt ist.

5. Abschirmanordnung nach Anspruch 4, **dadurch gekennzeichnet**, daß die Luft in Bewegung versetzt wird.

6. Abschirmanordnung nach Anspruch 5, **dadurch gekennzeichnet**, daß im Kabelsystem (**10**) eine Induktionsleiterschleife vorhanden ist, die dem Kabelsystem Energie entzieht und mit deren Hilfe ein Ventilator zur Umwälzung der Luft betrieben wird.
